# EUROPEAN PATENT SPECIFICATION

(11) **EP 1 160 131 B1**
(45) Date of publication and mention of the grant of the patent: **07.04.2004**
(21) Application number: 01112032.6
(22) Date of filing: 23.05.2001
(51) Int. Cl.: B60R 9/058

(54) **Connection device for fixing bars to a motor vehicle**
Verbindungsvorrichtung für Befestigungsstangen an einem Kraftfahrzeug
Dispositif de connection des rails latéraux pour un véhicule

(30) Priority: 02.06.2000 IT MI001244
(43) Date of publication of application: 05.12.2001
(73) Proprietor: FABBRI S.r.l., I-25040 Bornato Cazzago S. Martino (Brescia) (IT)
(72) Inventor: Fabbri Corsarini, Luciano, 25017 Sedena di Lonato (Prov. Brescia) (IT)
(74) Representative: Modiano, Guido, Dr.-Ing.

(56) References cited:
- WO-A-90/02668
- DE-U- 9 002 387
- FR-A- 2 705 295
- US-A- 5 306 156

## Description

The present invention relates to a connection device for fixing bars, racks and the like to a motor vehicle and the like.

It is known that especially in motor vehicles which are not provided with a driprail it is often a problem to achieve the stable connection of carryall bars, racks and the like because it is not possible to provide a safe coupling.

The provision of quick-type engagements which use elastic elements for coupling is even more difficult, since the presence of an elastic element can cause instability in the connection.

US-A-5306156 discloses a connection device for fixing bars to a motor vehicle of the same kind of the one set forth in the preamble of claim 1.

The aim of the invention is to eliminate the drawbacks mentioned above by providing a connection device for fixing bars, racks and the like to a motor vehicle and the like which allows to perform a stable engagement by using an interlocking between the elements which, besides providing great connection stability, is capable of having excellent safety characteristics.

Within this aim, an object of the present invention is to provide a connection device to which quick-type engagement and release means can be applied easily.

Another object of the present invention is to provide a connection device which, thanks to its particular constructive characteristics, is capable of giving the greatest assurances of reliability and safety in use.

Another object of the present invention is to provide a connection device which can be easily obtained starting from commonly commercially available elements and materials and is also competitive from a merely economical point of view.

This aim and these and other objects which will become better apparent hereinafter are achieved by a connection device for fixing bars, racks and the like to a motor vehicle and the like, comprising a supporting foot which supports a bar and the like and can be arranged at an engagement element provided on a motor vehicle, characterized in that it comprises a connection element being rigidly coupled to said supporting foot and coupleable to said engagement element, a locking element being further provided which is supported by said supporting foot and can engage simultaneously, in the locking position, said engagement element and said connection element.

Further characteristics and advantages of the present invention will become better apparent from the description of a preferred but not exclusive embodiment of a connection device for fixing bars, racks and the like to a motor vehicle and the like, illustrated only by way of non-limitative example with the aid of the accompanying drawings, wherein:
Figure 1 is a schematic exploded perspective view of the connection device;
Figure 2 is a top plan view of the connection device applied to a motor vehicle;
Figure 3 is a side elevation view of the connection device in the released or open position;
Figure 4 is a sectional view, taken along a vertical plane, of the connection device in the locking position;
Figure 5 is a front view of the connection device in the locking position;
Figure 6 is a side view of the connection device in the locking position.

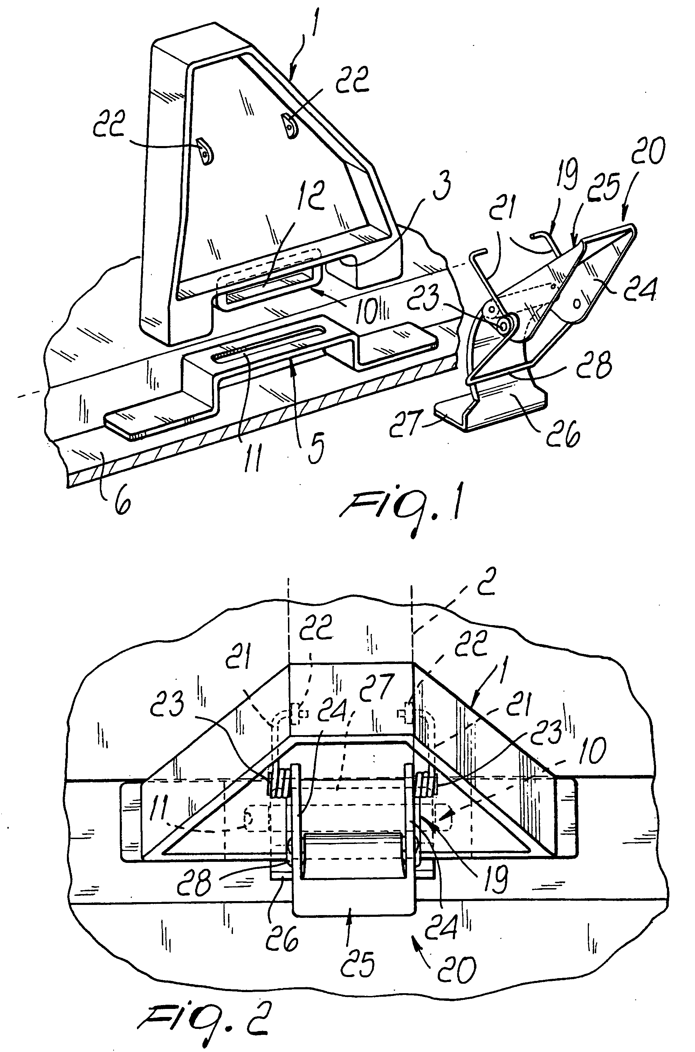

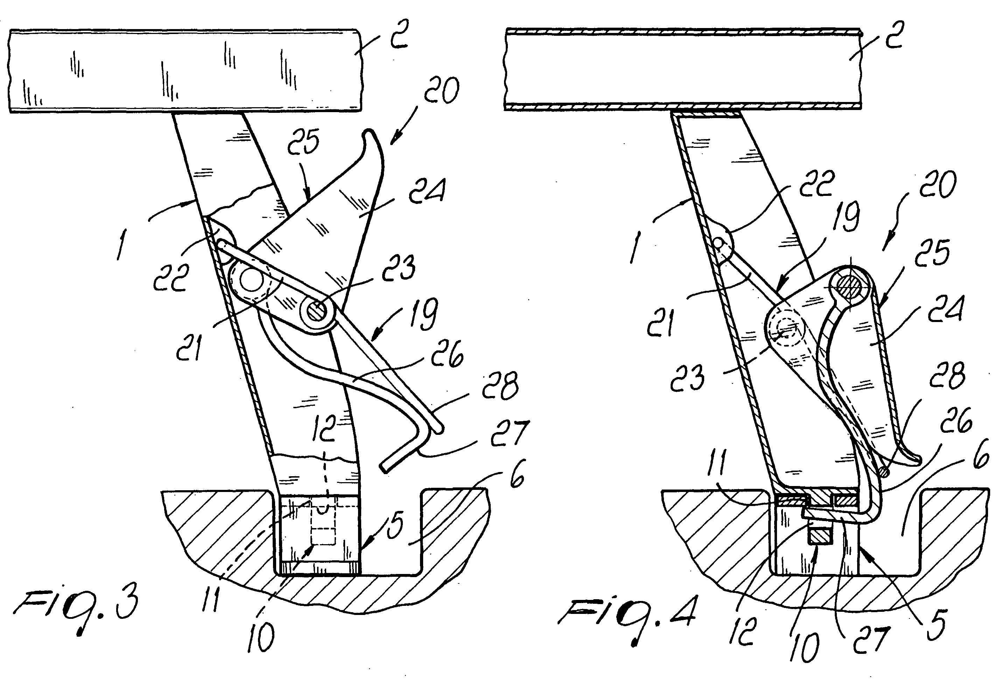

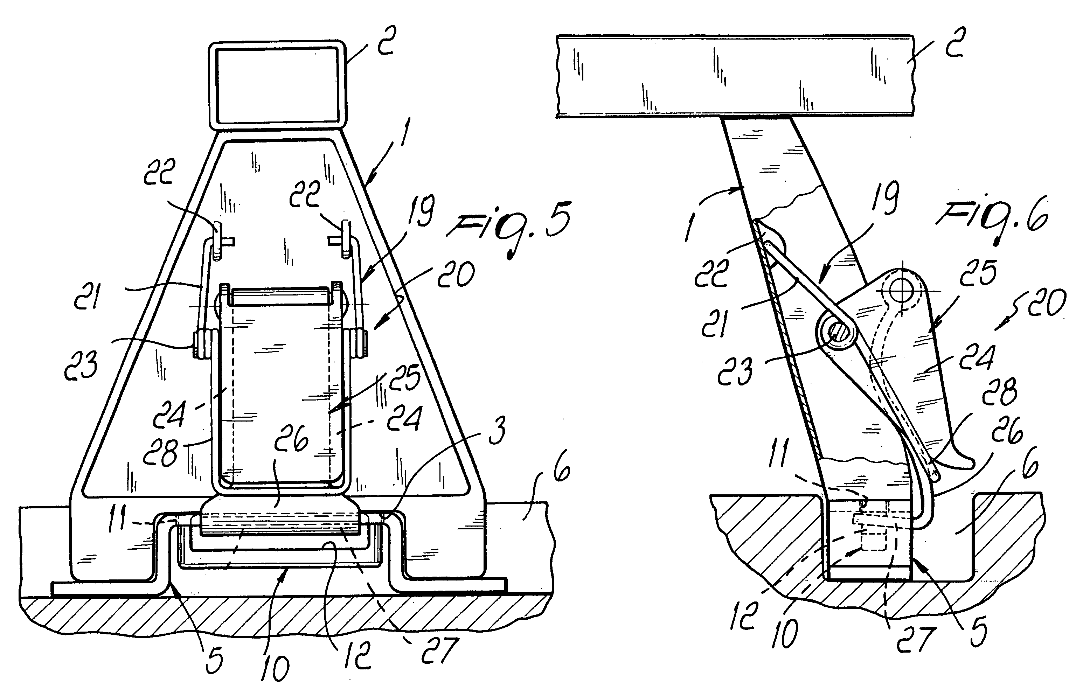

With reference to the figures, the connection device for fixing bars, racks and the like to a motor vehicle and the like, according to the invention, comprises a supporting foot 1 which can be of any shape and is connected to a bar, luggage rack or the like, generally designated by the reference numeral 2.

Advantageously, at the lower part of the supporting foot 1 a recess 3 is provided which can accommodate an engagement element advantageously constituted by a bridge 5 which is fixed at a groove 6 normally provided at the lateral edge of the roof of a motor vehicle and extends longitudinally.

One of the features of the invention consists in that the supporting foot 1, preferably in the region where the recess 3 is provided, has a connection element, designated by the reference numeral 10, being advantageously provided by means of a body which has a closed shape and can be inserted in a slot 11 formed in the central part of the bridge 5.

The closed-shape body 10 enters the slot and the open part 12 can be accessed at the lateral part of the bridge 5.

In order to perform closure, a locking element is provided, generally designated by the reference numeral 20, which is advantageously constituted by a quick engagement element provided by means of a flexing spring, constituted for example by a coiled spring 19, in which a first wing 21 is pivoted to lugs 22 provided on the supporting foot 1 and is mounted so that it can oscillate about a central pivot 23 formed in the side walls 24 of a lever 25.

An engagement arm 26 is articulated to the lever 25, in a point which is spaced from the pivot 23, and its pawl-shaped end 27 can be inserted under the bridge 5 and inside the opening 12 of the connection element, thus performing a locking action simultaneously on the engagement element and on the connection element.

The engagement arm 26 is pushed elastically by a second wing 28 of the coiled spring 21.

In order to perform locking, it is sufficient to turn the lever 25 clockwise with reference to the drawings, so as to insert the pawl-like element 27 under the bridge, thus providing a precise fastening which connects also the foot.

This arrangement provides a locking which is not affected by the elasticity of the elastic means, since the pawl-shaped element, which is an integral part of the engagement element, in practice produces an annular locking action on a part which is directly connected to the supporting foot, thus providing a truly stable fastening.

From the above description it is evident that the invention achieves the intended aim and objects and in particular the fact is stressed that the presence of the connection element constituted by the closed-shape body 10 allows to provide a connection which prevents any loosening under stress, since any forces that might tend to separate the supporting foot 1 from the roof of the motor vehicle would be biased by the functional connection provided by the pawl-like element inside the annular body.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A connection device for fixing bars, racks and the like to a motor vehicle, comprising:
an engagement element provided on a motor vehicle and comprising a bridge (5);
a supporting foot (1) which supports said bar (2) and which can be arranged at said engagement element;
a locking element (20) which is provided on said supporting foot (1); and
a connection element (10) which is rigidly coupled to said supporting foot (1) and coupleable to said engagement element;
**characterized in that** said locking element (20) comprises a pawl-shaped end (27) which can be inserted simultaneously under said bridge (5) of said engagement element and inside a lateral opening (12) formed by said connection element (10) so as to perform a locking action.

2. The connection device according to claim 1, **characterized in that** said supporting foot (1) has a recess (3) in which said engagement element (5) can be accommodated.

3. The connection device according to the preceding claims, **characterized in that** said bridge (5) of said engagement element is fixed in a groove (6) formed in the lateral edge of the roof of the motor vehicle.

4. The connection device according to one or more of the preceding claims, **characterized in that** said connection element is constituted by a protruding body (10) which protrudes from the lower face of said supporting foot (1) and has a lateral opening (12).

5. The connection device according to one or more of the preceding claims, **characterized in that** said bridge (5) has, in its central portion, a slot (11) for detachably accommodating said protruding body (10).

6. The connection device according to one or more of the preceding claims, **characterized in that** said locking element (20) is of the quick-engagement type.

7. The connection device according to claim 6, **characterized in that** said quick-engagement element (20) comprises a flexing spring (19) which is pivoted, at the ends of a first wing (21), to lugs (22) provided on said supporting foot (1), said flexing spring (19) being able to oscillate, in its central portion, about a central pivot (23) which is formed on the sides of a lever (25), an engagement arm (26) being articulated to said lever (25) in a point which is spaced from said pivot (23), said arm (26) ending with said pawl-shaped end (27) which can be inserted under said bridge (5) and can be accommodated inside the opening (12) formed by said protruding body (10).

8. The connection device according to one or more of the preceding claims, **characterized in that** said engagement arm (26) is pushed elastically by a second wing (28) of said flexing spring (19).

9. A carryall bar, rack and the like for motor vehicles, comprising a connection device according to claim 1.

## Patentansprüche

1. Verbindungsvorrichtung zum Befestigen von Schienen, Stangen und ähnlichem an einem Kraftfahrzeug, umfassend:
ein Eingriffselement, das an einem Kraftfahrzeug vorgesehen ist und eine Brücke (5) umfasst;
einen Haltefuß (1), der die Schiene (2) hält und der an dem Eingriffselement angeordnet werden kann;
ein Verriegelungselement (20), das an dem Haltefuß (1) vorgesehen ist; und
ein Verbindungselement (10), das starr an den Haltefuß (1) gekoppelt ist und an das Eingriffselement koppelbar ist;
**dadurch gekennzeichnet, dass** das Verriegelungselement (20) ein klinkenförmiges Ende (27) umfasst, das gleichzeitig unter der Brücke (5) des Eingriffselements und innerhalb einer seitlichen Öffnung (12) eingesetzt werden kann, die durch das Verbindungselement (10) gebildet ist, um so eine Verriegelung durchzuführen.

2. Verbindungsvorrichtung nach Anspruch 1, **dadurch gekennzeichnet, dass** der Haltefuß (1) eine Aussparung (3) hat, in der das Eingriffselement (5) aufgenommen werden kann.

3. Verbindungsvorrichtung nach den vorhergehenden Ansprüchen, **dadurch gekennzeichnet, dass** die Brücke (5) des Eingriffselements in einer Nut (6) befestigt ist, die in der seitlichen Kante des Dachs des Kraftfahrzeugs ausgebildet ist.

4. Verbindungsvorrichtung nach einem oder mehreren der vorhergehenden Ansprüchen, **dadurch gekennzeichnet, dass** das Verbindungselement aus einem abstehenden Körper (10) besteht, der von der unteren Seite des Haltefußes (1) absteht und eine seitliche Öffnung (12) hat.

5. Verbindungsvorrichtung nach einem oder mehreren der vorhergehenden Ansprüchen, **dadurch gekennzeichnet, dass** die Brücke (5) in ihrem mittleren Abschnitt einen Schlitz (11) zum lösbaren Aufnehmen des abstehenden Körpers (10) hat.

6. Verbindungsvorrichtung nach einem oder mehreren der vorhergehenden Ansprüchen, **dadurch gekennzeichnet, dass** das Verriegelungselement (20) ein Schnelleingriffselement ist.

7. Verbindungsvorrichtung nach Anspruch 6, **dadurch gekennzeichnet, dass** das Schnelleingriffselement (20) umfasst: eine sich biegende Feder (19), die an den Enden eines ersten Flügels (21) an Nasen (22) angelenkt ist, die auf dem Haltefuß (1) vorgesehen sind, wobei die sich biegende Feder (19) in ihrem zentralen Abschnitt um einen zentralen Zapfen (23) schwingen kann, der auf den Seiten eines Hebels (25) gebildet ist, wobei ein Eingriffsarm (26) an dem Hebel (25) an einem Punkt angelenkt ist, der von dem Zapfen (23) beabstandet ist, wobei der Arm (26) mit dem klinkenförmigen Ende (27) endet, das unter der Brücke (5) eingesetzt werden kann und innerhalb der Öffnung (12) aufgenommen werden kann, die durch den abstehenden Körper (10) gebildet ist.

8. Verbindungsvorrichtung nach einem oder mehreren der vorhergehenden Ansprüchen, **dadurch gekennzeichnet, dass** der Eingriffsarm (26) durch einen zweiten Flügel (28) der sich biegenden Feder (19) elastisch gedrückt wird.

9. Allesträger-Schiene, -Stange und ähnliches für Kraftfahrzeuge, umfassend eine Verbindungsvorrichtung nach Anspruch 1.

## Revendications

1. Dispositif d'accouplement pour fixer des barres, des ridelles et autres sur un véhicule à moteur, comprenant :
un élément d'engagement disposé sur un véhicule à moteur et comportant un arceau (5) ;
un pied de support (1) qui supporte ladite barre (2) et qui peut être installé sur ledit élément d'engagement ;
un élément de verrouillage (20) présent sur ledit pied de support (1) ; et
un élément d'accouplement (10) qui fait corps avec ledit pied de support (1) et peut être accouplé avec ledit élément d'engagement ;
**caractérisé en ce que** ledit élément de verrouillage (20) comporte une extrémité (27) en forme de cran d'arrêt (27) qui peut être insérée simultanément sous ledit arceau (5) dudit élément d'engagement et à l'intérieur d'une ouverture latérale (12) formée par ledit élément d'accouplement (10) afin de réaliser une action de verrouillage.

2. Dispositif d'accouplement selon la revendication 1, **caractérisé en ce que** ledit pied de support (1) comporte un évidement (3) dans lequel peut être reçu ledit élément d'engagement (5).

3. Dispositif d'accouplement selon les revendications précédentes, **caractérisé en ce que** ledit arceau (5) dudit élément d'engagement est fixé dans une gorge (6) formée dans le bord latéral du toit du véhicule à moteur.

4. Dispositif d'accouplement selon une ou plusieurs des revendications précédentes, **caractérisé en ce que** ledit élément d'accouplement est constitué par un corps saillant (10) qui dépasse de la face inférieure dudit pied de support (1) et possède une ouverture latérale (12).

5. Dispositif d'accouplement selon une ou plusieurs des revendications précédentes, **caractérisé en ce que** ledit arceau (5) a, dans sa partie centrale, une fente (11) servant à recevoir de manière amovible ledit corps saillant (10).

6. Dispositif d'accouplement selon une ou plusieurs des revendications précédentes, **caractérisé en ce que** ledit élément de verrouillage (20) est du type à action rapide.

7. Dispositif d'accouplement selon la revendication 6, **caractérisé en ce que** ledit élément (20) à action rapide comporte un ressort (19) à flexion qui pivote, aux extrémités d'une première branche (21), par rapport à des pattes (22) présentes sur ledit pied de support (1), ledit ressort (19) à flexion pouvant osciller, dans sa partie centrale, autour d'un pivot central (23) formé sur les côtés d'un levier (25), un bras d'engagement (26) étant articulé avec ledit levier (25) en un point espacé dudit pivot (23), ledit bras (26) se terminant par ladite extrémité (27) en forme de cran d'arrêt qui peut être insérée sous ledit arceau (5) et peut être reçue à l'intérieur de l'ouverture (12) formée par ledit corps saillant (10).

8. Dispositif d'accouplement selon une ou plusieurs des revendications précédentes, **caractérisé en ce que** ledit bras d'engagement (26) est poussé de manière élastique par une seconde branche (28) dudit ressort (19) à flexion.

9. Barre de toit, ridelle ou analogue pour véhicules à moteur, comportant un dispositif d'accouplement selon la revendication 1.
